# EUROPÄISCHE PATENTANMELDUNG

(11) **EP 4 726 207 A1**
(43) Veröffentlichungstag der Anmeldung: **15.04.2026**
(21) Anmeldenummer: 25202623.2
(22) Anmeldetag: 17.09.2025
(51) Int. Cl.: F03D 15/10, F03D 80/70

(54) **GETRIEBEANORDNUNG UND WINDKRAFTANLAGE**

(30) Priorität: 14.10.2024 DE 102024209953
(71) Anmelder: ZF Friedrichshafen AG, 88046 Friedrichshafen (DE); ZF Wind Power Antwerpen NV, 3920 Lommel (BE)
(72) Erfinder: Gajjela, Srinivasulu, 3010 Kessel lo (BE)
(74) Vertreter: ZF Friedrichshafen AG

(57) **Zusammenfassung**

Die Erfindung betrifft eine Getriebeanordnung für eine Windkraftanlage (10). Ein Getriebe (22) weist wenigstens ein Getriebegehäuse (36) und einen darin angeordneten Planetenradsatz (32) auf. Ein Planetenträger (38) des Planetenradsatzes (32) bildet einen Antrieb des Getriebes (22) aus, wobei der Planetenträger (38) in der montierten Windkraftanlage (10) an einer Rotorwelle (16) der Windkraftanlage (10) gelagert ist. Das Getriebegehäuse (36) weist an einer in der montierten Windkraftanlage (10) einem Rotor (12) der Windkraftanlage (10) zugewandten Ende einen sich radial erstreckenden Endabschnitt (50) auf. Die Getriebeanordnung weist zudem ein Dichtelement (52) auf, welches den sich radial erstreckenden Endabschnitt (50) mit dem Planetenträger (38) abdichtet, um einen Innenraum des Getriebegehäuses (36) rotorseitig abzudichten. Zudem bezieht sich die Erfindung auf eine Windkraftanlage (10).

## Beschreibung

Die vorliegende Erfindung bezieht sich auf eine Getriebeanordnung für eine Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird dabei durch das Getriebe in eine geeignete Drehzahl übersetzt, um einen Generator anzutreiben. Aufgrund ihrer Größe werden moderne Windkraftanlagen üblicherweise in mehreren Teilen an den Aufstellungsort transportiert und erst vor Ort aneinander montiert. Teile des Getriebes sind dabei an der Rotorwelle gelagert, wodurch das Getriebe erst im montierten Zustand der Windkraftanlage eingeschlossen ist, beispielsweise in einem entsprechenden Getriebegehäuse. Entsprechend wird das Getriebe während des Transports und vor dem Aufbau und bei der Montage der Windkraftanlage oft umständlich vor Verschmutzungen geschützt, welche andernfalls eine Lebensdauer und Effizienz der Windkraftanlage senken können. Alternativ oder zusätzlich kann auch eine Reinigung bei der Montage erfolgen, beispielsweise durch eine Spülung. Diese ist ebenfalls aufwendig und teuer.

### Darstellung der Erfindung

Ein erster Aspekt betrifft eine Getriebeanordnung für eine Windkraftanlage. Die Windkraftanlage kann beispielsweise einen Rotor und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor, das Getriebe und der Generator können beispielsweise an einer Gondel der Windkraftanlage befestigt sein. Die Gondel kann beispielsweise drehfest oder drehbar auf einem Turm montiert sein. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind.

Die Getriebeanordnung weist ein Getriebe auf. Das Getriebe weist wenigstens ein Getriebegehäuse auf. Das Getriebegehäuse kann beispielsweise ein oder mehrere Gehäuseelemente aufweisen. Das Getriebegehäuse kann einen Innenraum ausbilden. Das Getriebegehäuse kann in der Gondel der Windkraftanlage befestigt sein. Das Getriebe kann einen Antrieb und einen Abtrieb aufweisen. Der Antrieb ist beispielsweise mit dem Rotor mechanisch wirkverbunden und der Abtrieb mit dem Generator.

Das Getriebe weist einen in einem Innenraum des Getriebegehäuses angeordneten Planetenradsatz auf. Ein Planetenradsatz ist beispielsweise als Minus-Planetenradsatz oder Plus-Planetenradsatz ausgebildet. Ein Planetenradsatz weist beispielsweise ein Sonnenrad, einen Planetenträger und ein Hohlrad auf. Die Sonnenräder, Planetenträger und Hohlräder eines Planetenradsatzes bilden beispielsweise dessen Drehelemente. Jeder Planetenradsatz kann ein oder mehrere Planetenräder aufweisen, welche drehbar an dem Planetenträger befestigt sind. Die Planetenräder können an dem Planetenträger über Planetenbolzen gelagert sein. Die Planetenbolzen können zu einem Trägerelement separat oder integral ausgebildet sein. Die Planetenräder können an den Planetenbolzen drehbar gelagert sein. Die Planetenbolzen können alternativ oder zusätzlich drehbar an dem Trägerelement gelagert sein. Beispielsweise kämmen die Planetenräder eines Planetenradsatzes jeweils mit einem Sonnenrad und einem Hohlrad eines Planetenradsatzes. Eine Drehachse eines Planetenradsatzes kann einer Drehachse der Drehelemente entsprechen. Jeweilige Planetenradsätze können beispielsweise koaxial mit der Rotorwelle angeordnet sein.

Der Planetenträger des Planetenradsatzes bildet einen Antrieb des Getriebes aus. Der Planetenträger kann eine Eingangswelle des Getriebes ausbilden. Der Planetenträger kann einteilig oder mehrteilig ausgebildet sein. Beispielsweise weist der Planetenträger an seinem im montierten Zustand dem Rotor zugewandten Ende ein axiales Wellenstück auf. Beispielsweise kann der Planetenträger in der montierten Windkraftanlage permanent drehfest mit der Rotorwelle verbunden sein. Beispielsweise können der Planetenträger und die Rotorwelle zueinander korrespondierende Verzahnungen aufweisen, über welche der Planetenträger und die Rotorwelle miteinander eingreifen. Die Rotorwelle und der Planetenträger können koaxial angeordnet sein. Das Hohlrad oder Sonnenrad kann beispielsweise den Abtrieb des Getriebes ausbilden. Das Getriebe kann auch mehrere Planetenradsätze aufweisen, welche miteinander mechanisch wirkverbunden sind. Beispielsweise kann der Abtrieb auch durch ein Drehelement eines zweiten Planetenradsatzes ausgebildet sein. Planetenradsätze können bauraumsparend hohe Übersetzungen bereitstellen und hohen Drehmomenten gut widerstehen.

Der Planetenträger ist in der montierten Windkraftanlage an einer Rotorwelle der Windkraftanlage gelagert. Der Planetenträger kann in der montierten Windkraftanlage nur an der Rotorwelle der Windkraftanlage gelagert sein. Beispielsweise kann die Rotorwelle über zwei Rollenlager an der Gondel gelagert sein. Auf die Rotorwelle können hohe Lasten durch den Rotor wirken, weshalb eine Lagerung nahe an dem Rotor kleinere Lager erlauben kann. Beispielsweise ist die Rotorwelle mit zwei Wälzlagern an der Gondel gelagert. Der Planetenträger kann dann einfach an der Rotorwelle gelagert werden, beispielsweise durch eine Verschraubung oder Pressverbindung. Der Planetenträger kann direkt oder indirekt mit der Rotorwelle zu dessen Lagerung verbunden sein. Der Planetenträger ist beispielsweise nicht an dem Getriebegehäuse gelagert, beispielsweise weder direkt noch indirekt. Die Rotorwelle kann ein Teil der Getriebeanordnung sein oder als dazu separates Teil angesehen werden. Im unmontierten Zustand ist der Planetenträger beispielsweise nicht wie im betriebsbereiten Zustand gelagert. Beispielsweise wird der Planetenträger während des Transports zur Montage mit Klemmen, Hülsen, Bolzen, Schrauben oder anderen Klemmelementen an dem Getriebegehäuse fixiert, um ein unerwünschtes Verschieben und auch eine Beschädigung des Getriebes während des Transports zu vermeiden. Bei der Montage kann diese Fixierung gelöst werden und entsprechende Klemmelemente entfernt werden.

Das Getriebegehäuse weist an einer in der montierten Windkraftanlage einem Rotor der Windkraftanlage zugewandten Ende einen sich radial erstreckenden Endabschnitt auf. Der Endabschnitt kann sich dabei bis zu dem Planetenträger erstrecken, insbesondere bis zu einem die Eingangswelle ausbildenden axialen Wellenabschnitt des Planetenträgers. Ein Spalt zwischen dem sich radial erstreckenden Endabschnitt und dem Planetenträger kann dabei eine für die Abdichtung durch eine Dichtung geeignete Breite haben. Beispielsweise kann der Spalt etwas eine halbe Höhe eines typischen O-Rings in dem entsprechenden Durchmesser aufweisen. Der sich radial erstreckende Endabschnitt kann beispielsweise eine umlaufende axiale Wandung sein. Der sich radial erstreckende Endabschnitt kann eine Ringform haben. Die Wandung kann beispielsweise im Betrieb im Wesentlichen frei von durch das Getriebe aufgebrachten Lasten sein. Der sich radial erstreckende Endbereich kann nicht lasttragend sein. Der radial erstreckende Endbereich kann beispielsweise nur für die Abdichtung und optional noch für eine Ölführung zur Schmierung des Getriebes oder auch nur des Planetenradsatzes ausgebildet sein. Der sich radial erstreckende Endbereich hat beispielsweise keine tragenden Eigenschaften. Die Wandung kann beispielsweise keinen Lagerungsabschnitt für im Betrieb drehende Teile des Getriebes oder der Windkraftanlage insgesamt ausbilden. Ein dem in der montierten Windkraftanlage dem Rotor zugewandtes Ende des Planetenträgers erstreckt sich beispielsweise aus dem Gehäuse heraus, zum Beispiel durch eine zentrale Durchgangsöffnung in dem sich radial erstreckenden Endabschnitt des Gehäuses. Dieser Teilbereich des Planetenträgers kann beispielsweise in dem montierten Zustand mit der Rotorwelle verbunden sein, sodass der Planetenträger daran gelagert wird.

Die Getriebeanordnung weist ein Dichtelement auf, welches den sich radial erstreckenden Endabschnitt mit dem Planetenträger abdichtet, um den Innenraum rotorseitig abzudichten. Diese Abdichtung kann wenigstens in dem unmontierten Zustand der Windkraftanlage erfolgen. Das Dichtelement kann also vor dem montierten Zustand, beispielsweise mindestens bis zur Montage der Rotorwelle an dem Planetenträger, den Innenraum des Getriebegehäuses abdichten. Nach der Montage kann das Dichtelement dagegen überflüssig sein, da das Getriebe rotorseitig mit der Lagerung der Rotorwelle abgedichtet sein kann. Die Abdichtwirkung des Dichtelements kann im Betrieb verloren gehen. Das Dichtelement kann aber auch für eine Abdichtung im Betrieb ausgebildet sein und dabei ein relatives Drehen eines Bauteils, wie des Planetenträgers, erlauben. Das Dichtelement kann das Getriebegehäuse beispielsweise gegen ein Gehäuse für die Lagerung der Rotorwelle, wie die Gondel oder ein dazu separates inneres Gehäuse, abdichten. Zudem können geringfügige Leckagen aus dem Getriebe heraus unbedenklich für die Lebensdauer und Leistungsfähigkeit sein, anders als beispielsweise Verschmutzungen und Wasser, welche in das Getriebe vor der Montage eingedrungen sind. Dadurch kann auf entsprechende Abdeckungen vor der Montage, bei der Montage und alternativ oder zusätzlich beim Transport verzichtet werden. Das Dichtelement muss auch nicht nach der Montage der Windkraftanlage oder bei deren Montage entfernt werden. Dadurch wird der Transport und Aufbau der Windkraftanlage erheblich vereinfacht. Beispielsweise ist das Dichtelement auch im montierten Zustand der Windkraftanlage weiter in dem Getriebe angeordnet.

Das Dichtelement dichtet beispielsweise einen radialen Spalt zwischen dem sich radial erstreckenden Endabschnitt und dem Planetenträger ab, beispielsweise durch eine axiale und alternativ oder zusätzlich radiale Anordnung zwischen dem sich radial erstreckenden Endabschnitt des Getriebegehäuses und dem Planetenträger. Das Dichtelement kann direkt mit dem sich radial erstreckenden Endabschnitt des Getriebegehäuses kontaktiert sein. Das Dichtelement kann direkt mit dem Planetenträger kontaktiert sein. Das Dichtelement kann aber auch mittelbar abdichten, beispielsweise durch Anlage an einem zusätzlichen Bauteil, wie einem Ölführungsbauteil oder einem Fixierring, mit welchem das Dichtelement an dem Planetenträger und alternativ oder zusätzlich dem Getriebegehäuse befestigt ist. Das Dichtelement kann ein separates Bauteil sein. In diesem Fall kann dessen Herstellung kostengünstig sein. Das Dichtelement kann aber auch integral in anderen Bauteilen ausgebildet sein. Beispielsweise kann das Dichtelement an dem Planetenträger, dem Getriebegehäuse oder auch einem Ring, welcher den Planetenträger während des Transports in dem Getriebegehäuse hält, angeformt sein. Beispielsweise kann das Dichtelement an einem Ölführungsbauteil aus Kunststoff angespritzt sein. Dann kann eine separate Montage des Dichtelements nicht erforderlich sein.

In einer Ausführungsform der Getriebeanordnung kann es vorgesehen sein, dass der sich radial erstreckende Endabschnitt dazu ausgebildet ist, dem Planetenradsatz Öl für dessen Schmierung zuzuführen. Dafür kann der sich radial erstreckende Endabschnitt beispielsweise Ölführungskanäle aufweisen. Beispielsweise weist der sich radial erstreckende Endabschnitt einen sich radial erstreckenden Ölkanal auf. Beispielsweise dient dies zur Schmierung mehrerer oder nur eines der Drehelemente. Beispielsweise kann über den sich radial erstreckenden Endabschnitt eine Schmierung von Planetenbolzen des Planetenträgers und alternativ oder zusätzlich von Planetenrädern erfolgen. Dadurch kann die Getriebeanordnung kompakt sein, da der sich radial erstreckende Endabschnitt nicht nur zur Dichtung vor der Montage, sondern auch zur Schmierölversorgung des Getriebes genutzt wird. Sofern mehrere Planetenradsätze vorgesehen sind, kann so beispielsweise ein sich radial erstreckender Ölkanal, beispielsweise durch ein Gehäuseelement ausgebildet, zwischen den beiden Planetenradsätzen ersetzt werden, welcher sonst zur Schmierung dient. Dadurch kann das Getriebe eine kurze axiale Erstreckung aufweisen.

In einer Ausführungsform der Getriebeanordnung kann es vorgesehen sein, dass die Getriebeanordnung ein Ölführungselement aufweist. Das Ölführungselement kann dazu ausgebildet sein, Öl von dem sich radial erstreckende Endabschnitt zu dem Planetenträger für dessen Schmierung zu leiten. Beispielsweise kann das Ölführungselement axial zusätzlich einen Ölraum hin zum Rotor begrenzen. Das Ölführungselement kann beispielsweise als Kunststoffbauteil ausgebildet sein. Das Ölführungselement kann beispielsweise mit dem sich radial erstreckenden Endabschnitt verschraubt sein. Das Ölführungselement kann beispielsweise nach dem Dichtelement montiert werden und das Dichtelement halten. Das Ölführungselement kann das Dichtelement auch ausbilden. Das Ölführungselement kann als Fixierring ausgebildet sein. Beispielsweise ist das Ölführungselement radial und alternativ oder zusätzlich axial zwischen dem sich radial erstreckenden Endabschnitt und dem Planetenträger angeordnet. Das Dichtelement kann beispielsweise an dem Ölführungselement und dem Planetenträger anliegen.

In einer Ausführungsform der Getriebeanordnung kann es vorgesehen sein, dass der Planetenträger wenigstens einen sich axial von einem in der montierten Windkraftanlage dem Rotor zugewandten Ende zu einem Planetenbolzen des Planetenträgers erstreckenden Ölkanal aufweist. Dadurch kann das Öl von dem sich radial erstreckenden Endabschnitt zu dem Planetenträger geführt werden. Beispielsweise kann der Ölkanal durch zwei Teilabschnitte in dem Planetenträger ausgebildet sein. Beispielsweise kann der Ölkanal durch eine axiale Bohrung in dem Planetenträger gebildet sein. Der Ölkanal kann auch ein Kanalelement, wie ein Rohr, aufweisen. Pro Planetenbolzen kann ein solcher Ölkanal vorgesehen sein. Es kann aber auch nur ein einziger Ölkanal oder eine andere Anzahl von Ölkanälen vorgesehen sein. Der Ölkanal kann der Schmierung des Planetenträgers dienen. Der Ölkanal kann fluidisch mit dem Ölführungselement und alternativ oder zusätzlich einer Ölführung in dem sich radial erstreckende Endabschnitt verbunden sein.

In einer Ausführungsform der Getriebeanordnung kann es vorgesehen sein, dass die Getriebeanordnung eine in der montierten Windkraftanlage dem Rotor zugewandte Ölrückführung aufweist. Die Ölrückführung kann dazu ausgebildet sein, Öl zurück in den Innenraum des Getriebegehäuses zu führen. So kann rotorseitig im Betrieb ausgetretenes Öl zurück in den Innenraum des Getriebegehäuses gefördert werden. Die Ölrückführung kann entsprechende Elemente zum Führen des Öls und/oder entsprechende Ölkanäle aufweisen. Beispielsweise kann eine rotorseitige Eingangsöffnung der Ölrückführung radial innen zu einer Ausgangsöffnung angeordnet sein, welche in den Innenraum des Getriebegehäuses führt. Dadurch kann eine Rotation des Getriebes und ein Betrieb der Windkraftanlage eine Förderwirkung haben, sodass für die Ölrückführung beispielsweise keine Pumpe vorgesehen sein muss.

In einer Ausführungsform der Getriebeanordnung kann es vorgesehen sein, dass die Getriebeanordnung ein Rückführungselement aufweist. Das Rückführungselement kann rotorseitig neben dem Getriebegehäuse außerhalb des Innenraums angeordnet sein. Das Rückführungselement kann einen sich wenigstens teilweise radial nach außen erstreckenden Ölkanal aufweisen. Radial nach außen erstreckend kann bedeuten, dass eine Eingangsöffnung radial innen zu einer Ausgangsöffnung angeordnet ist. Durch das Rückführungselement kann beispielsweise an dem Innenraum rotorseitig ausgetretenes Öl aufgefangen und in den Innenraum zurückgeleitet werden. Das Rückführungselement kann das Dichtelement ausbilden. Das Rückführungselement kann das Dichtelement halten. Das Dichtelement kann zwischen dem Rückführungselement und dem Planetenträger angeordnet sein. Das Rückführungselement kann axial an dem sich radial erstreckenden Endabschnitt anliegend angeordnet sein. Das Rückführungselement kann beispielsweise als Kunststoffbauteil ausgebildet sein. Das Rückführungselement kann fluidisch mit dem Innenraum des Getriebegehäuses verbunden sein. Beispielsweise kann der sich radial erstreckende Endabschnitt eine axiale Durchgangsöffnung aufweisen, welche das Rückführungselement fluidisch mit dem Innenraum des Getriebegehäuses verbindet. Das Ölrückführungselement kann eine axiale Sicherung für das zuvor beschriebene Ölführungselement ausbilden. Beispielsweise kann diese axiale Sicherung als ein Sicherungsring ausgebildet sein, welcher mit dem Planetenträger verbunden ist, beispielsweise durch eine Verschraubung. Alternativ kann auch ein separater Sicherungsring oder nur ein Sicherungsring ohne Ölrückführungsfunktion vorgesehen sein.

In einer Ausführungsform der Getriebeanordnung kann es vorgesehen sein, dass das Dichtelement zwischen dem Rückführungselement und dem Planetenträger abdichtet. Dadurch kann das Dichtelement einfach montiert und gehalten werden. Zudem ist so beispielsweise kein Dichtsitz oder dergleichen an dem Getriebegehäuse für das Dichtelement erforderlich.

In einer Ausführungsform der Getriebeanordnung kann es vorgesehen sein, dass der sich radial erstreckende Endabschnitt eine Durchgangsöffnung aufweist, welche für die Ölrückführung in den Innenraum des Getriebegehäuses ausgebildet ist. Diese Durchgangsöffnung erstreckt sich beispielsweise axial. Diese Durchgangsöffnung ist beispielsweise radial außenseitig zu dem Dichtelement angeordnet und auch radial außenseitig zu einer Schmierölversorgung.

In einer Ausführungsform der Getriebeanordnung kann es vorgesehen sein, dass das Dichtelement als temporäre Dichtung ausgebildet ist. Eine temporäre Dichtung dichtet beispielsweise nicht oder nur anfänglich im Betrieb der Windkraftanlage ab. Beispielsweise ist das Dichtelement dazu ausgebildet, im Betrieb der montierten Windkraftanlage schnell zu verschleißen und seine Dichtwirkung zu verlieren. Das Dichtelement ist beispielsweise nicht für eine Relativbewegung der beiden miteinander abgedichteten Bauteile ausgebildet. Beispielsweise dichtet das Dichtelement nur während Transport und Montage ab. Im Betrieb der Windkraftanlage verliert das temporäre Dichtelement seine Dichtwirkung bereits nach kurzer Zeit oder kann beispielsweise verrutschen. Dadurch kann das Dichtelement sehr kostengünstig sein. Beispielsweise kann im Betrieb keine Abdichtung mehr erforderlich sein.

Ein zweiter Aspekt betrifft eine Windkraftanlage. Die Windkraftanlage weist einen Rotor auf. Der Rotor ist mit einer Rotorwelle der Windkraftanlage beispielsweise permanent drehfest verbunden. Die Windkraftanlage weist eine Getriebeanordnung gemäß dem ersten Aspekt auf. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Der Planetenträger ist an der Rotorwelle der Windkraftanlage gelagert. Beispielsweise kann der Planetenträger ausschließlich an der Rotorwelle der Windkraftanlage gelagert sein. Keine anderen Lager stützen dann beispielsweise direkt den Planetenträger. Es kann aber sein, dass Verzahnungen des Planetenradsatzes und damit die Wirkverbindung mit anderen Drehelementen den Planetenträger zumindest zusätzlich stützen. Die Rotorwelle kann mit dem Planetenträger der Getriebeanordnung permanent drehfest verbunden sein.

### Kurze Beschreibung der Figuren

Fig. 1 veranschaulicht schematisch eine Windkraftanlage.
Fig. 2 veranschaulicht schematisch in einer seitlichen Schnittansicht eine Rotorwelle und ein Getriebe der Windkraftanlage.
Fig. 3 veranschaulicht schematisch in einer seitlichen Schnittansicht eine erste Ausführungsform einer Getriebeanordnung für die Windkraftanlage von Fig. 1.
Fig. 4 veranschaulicht schematisch in einer seitlichen Schnittansicht Details der ersten Ausführungsform der Getriebeanordnung für die Windkraftanlage von Fig. 1.
Fig. 5 veranschaulicht schematisch in einer seitlichen Schnittansicht Details einer zweiten Ausführungsform der Getriebeanordnung für die Windkraftanlage von Fig. 1.

### Detaillierte Beschreibung von Ausführungsformen

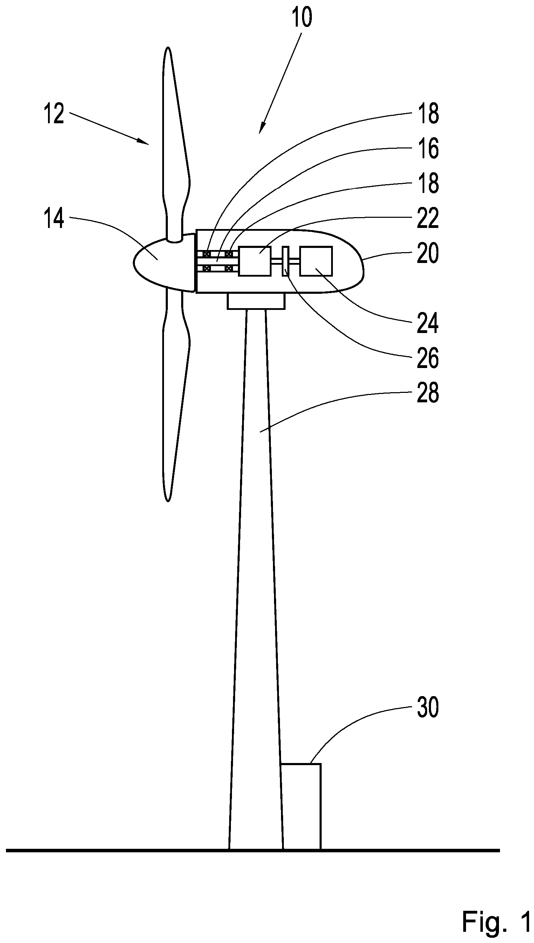

Fig. 1 veranschaulicht eine Windkraftanlage 10 in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18 in einer Gondel 20 gelagert. Die Rotorwelle 16 ist über ein Getriebe 22 mechanisch mit einem Generator 24 wirkverbunden. In der Wirkverbindung zwischen Getriebe 22 und Generator 24 ist noch eine Bremse 26 angeordnet. Die Gondel 20 ist drehbar an einem oberen Ende eines Turms 28 gelagert, welcher am Boden verankert ist. Die Windkraftanlage 10 ist in einer weiteren Ausführungsform als Off-Shore Anlage ausgebildet. Neben dem Turm 28 weist die Windkraftanlage 10 noch einen Netzanschluss 30 auf.

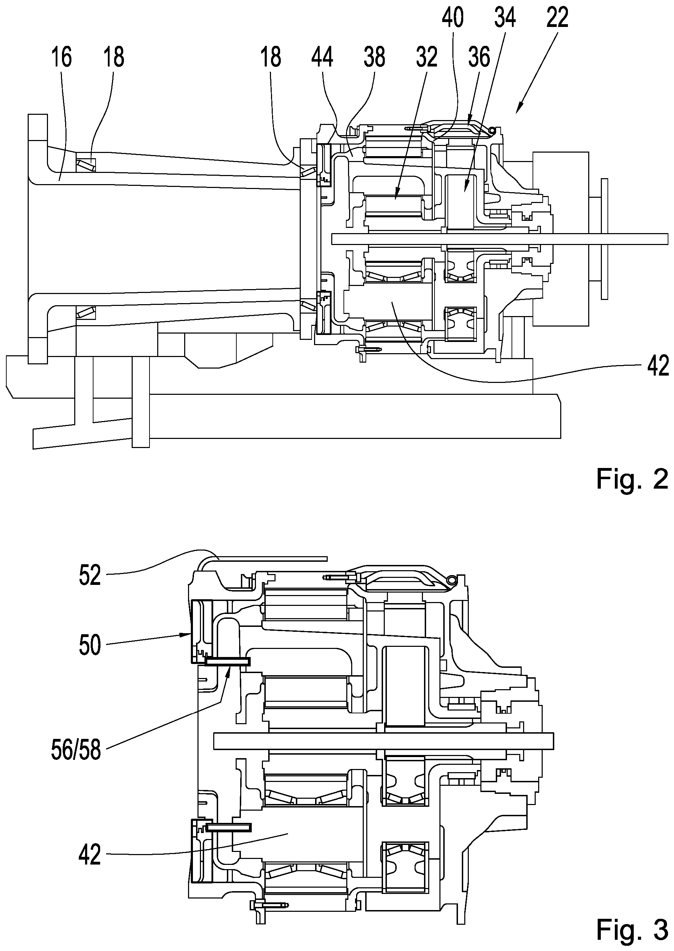

In Fig. 2 ist in einer schematischen Schnittansicht ein Kerngedanke der vorliegenden Offenbarung veranschaulicht. Gezeigt ist hier die Rotorwelle 16 mit den zwei Wälzlagern 18. An der Rotorwelle 16 ist das Getriebe 22 angeflanscht. Das Getriebe 22 weist in dem gezeigten Beispiel einen ersten rotorseitigen Planetenradsatz 32 und einen zweiten generatorseitigen Planetenradsatz 34 auf. Die beiden Planetenradsätze 32, 34 stellen eine Übersetzung bei einer Übertragung des durch Wind an dem Rotor 12 eingeleiteten Drehmoments zu dem Generator 24 bereit. Die beiden Planetenradsätze 32, 34 sind in einem Innenraum des Getriebegehäuses 36 angeordnet.

Bei einer Montage der Windkraftanlage 10 werden der Rotor 12, die Rotorwelle 16 mit deren Wälzlagern 18 und das Getriebe 22 zunächst getrennt zu einem Aufstellungsort transportiert und erst dort aneinander montiert. Wie beispielsweise in Fig. 2 zu erkennen ist, bildet ein Planetenträger 38 des ersten Planetenradsatzes 32 eine Eingangswelle des Getriebes 22, welches permanent drehfest mit der Rotorwelle 16 verbunden ist. Der Planetenträger 38 des ersten Planetenradsatzes 32 ist dabei nur oder zumindest hauptsächlich über die Rotorwelle 16 gelagert. Erkennbar ist auch, dass das Getriebegehäuse 36 an dessen rotorseitigem Endbereich offen zu der Rotorwelle 16 ist und der Innenraum des Getriebegehäuses 36 hier offen ist. Bei dem Transport und auch der Montage können hier somit Wasser, Fremdkörper und sonstige Verschmutzungen eintreten. Dies kann einen umfangreichen Schutz vor einem solchen Eintritt und alternativ oder zusätzlich eine Spülung nach der Montage erfordern, was sehr aufwendig ist.

Das Getriebegehäuse 36 gemäß Fig. 2 weist axial zwischen den beiden Planetenradsätzen 32, 34 ein Zwischengehäuseelement 40 auf. Dieses Zwischengehäuseelement 40 hat keine tragende Funktion und stellt keine Flächen zur Anordnung eines Lagers daran bereit, aber eine sich radial nach innen erstreckende Wand. Diese Wand dient zur Schmierölversorgung jeweiliger Planetenbolzen 42 des Planetenträgers 38.

Um das Getriebe 22 vor Verschmutzungen während des Transports und der Montage zu schützen, wird diese Wand axial in Richtung des Rotors verlagert. Dies ist in Fig. 2 bereits mit Linien 44 veranschaulicht. Die sich radial nach innen erstreckende Wand zwischen den beiden Planetenradsätzen 32, 34 kann dadurch zudem entfallen, womit das Getriebe 22 weiter axial eine kurze Erstreckung aufweist.

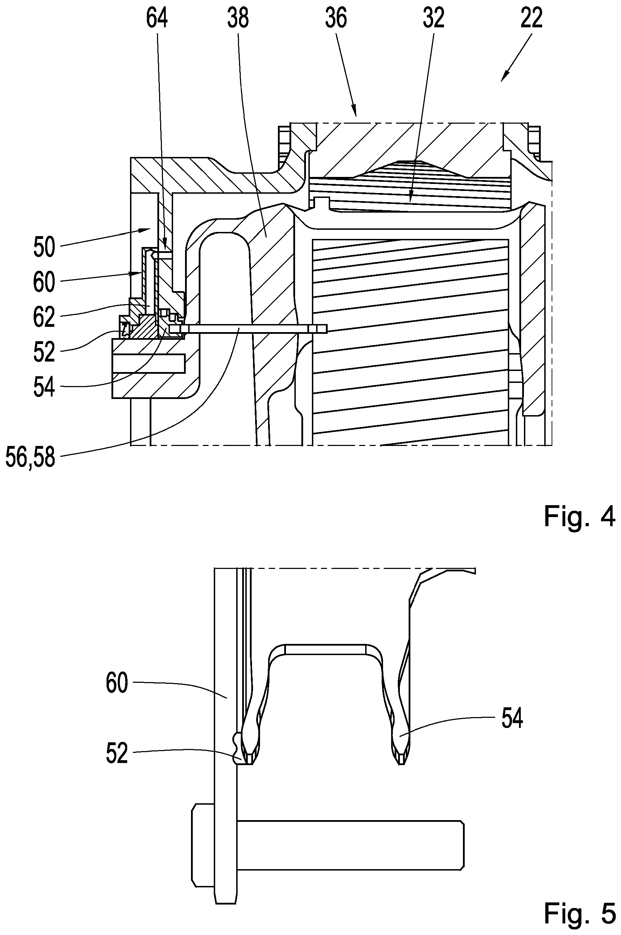

Wie in Fig. 3 zu erkennen ist, weist das Getriebegehäuse 36 an einem in der montierten Windkraftanlage 10 dem Rotor 12 zugewandten Ende einen sich radial erstreckenden Endabschnitt 50 auf. Dieser sich radial erstreckende Endabschnitt 50 dient sowohl zur Schmierölversorgung der Planetenbolzen 42 des Planetenträgers 38 des ersten Planetenradsatzes 32 als auch eines rotorseitigen Abdichtens des Getriebegehäuses 36 zumindest vor einer Endmontage. Zusätzlich ist dafür zudem ein Dichtelement 52 vorgesehen. Details von Ausführungsformen dieser Anordnung sind in Fig. 4 und Fig. 5 veranschaulicht. Die Windkraftanlage 10 weist nun einen zu diesem Endabschnitt 50 verlängerten Ölkanal 52 auf, welcher zuvor das Zwischengehäuseelement 40 mit Öl versorgt hat.

Der sich radial erstreckende Endabschnitt 50 weist eine oder mehrere sich radial erstreckende und nicht dargestellte Durchgangsöffnungen als Ölkanäle auf, welche mit dem Ölkanal 52 fluidisch verbunden sind. Radial innenseitig ist an dem sich radial erstreckenden Endabschnitt 50 zwischen einem Wellenabschnitt des Planetenträgers 38, welcher mit der Rotorwelle 16 permanent drehfest verbunden ist, und dem sich radial erstreckenden Endabschnitt 50 ein Ölführungselement 54 angeordnet. Das Ölführungselement 54 ist dazu ausgebildet, Öl von dem sich radial erstreckenden Endabschnitt 50 zu dem Planetenträger 38 für dessen Schmierung zu leiten. Das Ölführungselement 54 ist dazu an seiner dem sich radial erstreckenden Endabschnitt 50 zugewandten Seite gestuft ausgebildet. Dadurch wird eine Art Labyrinth ausgebildet, welches eine axiale Leckage in Richtung des Rotors 12 reduziert. Der Planetenträger 38 weist wenigstens einen sich axial von einem in der montierten Windkraftanlage 10 dem Rotor 12 zugewandten Ende zu einem Planetenbolzen 42 des Planetenträger 38 und alternativ oder zusätzlichen den Planetenrädern an dem Planetenträger 38 erstreckenden Ölkanal 56 auf. Dieser Ölkanal 56 ist mit dem Ölführungselement 54 fluidisch verbunden. Vorliegend ist der Ölkanal 56 durch zwei Durchgangsbohrung in zwei axialen Wandungsbereichen des Planetenträgers 38 gebildet, in welchem ein Leitungselement 58 angeordnet ist.

Axial wird das Ölführungselement 54 rotorseitig durch einen Sicherungsring 60 gehalten, welcher an dem sich radial erstreckenden Endabschnitt 50 angeschraubt oder anderweitig befestigt ist. Dieser Sicherungsring 60 ist bei der ersten Ausführungsform als ein in der montierten Windkraftanlage 10 dem Rotor 12 zugewandtes Rückführungselement 60 ausgebildet. Das Rückführungselement 60 ist Teil einer in der montierten Windkraftanlage 10 dem Rotor 12 zugewandten Ölrückführung, welche dazu ausgebildet ist, Öl im Bereich der Rotorwelle 16 und deren Wälzlagern 18 zurück in den Innenraum des Getriebegehäuses 36 zu führen. Dafür weist das Rückführungselement 60 einen sich wenigstens teilweise radial nach außen erstreckenden Ölkanal 62 auf, dessen Eingangsöffnung radial innen zu einer Ausgangsöffnung angeordnet ist. Zudem weist die Ölrückführung eine sich axial erstreckende Durchgangsöffnung 64 in dem Planetenträger 38 auf, welche radial außen zu dem Ölkanal 56 angeordnet ist. Die Durchgangsöffnung 64 ist fluidisch mit dem Ölkanal 62 verbunden. **In** einer anderen Ausführungsform ist keine solche Ölrückführung vorgesehen. Eine solche Ausführungsform ist beispielsweise in Fig. 4 veranschaulicht.

**In** der ersten Ausführungsform, wie in Fig. 4, ist das Dichtelement 52 als separates Teil radial zwischen dem Rückführungselement 60 und dem Wellenabschnitt des Planetenträgers 38 angeordnet und dichtet somit dort das Getriebegehäuse 36 in Richtung des Rotors 12 ab. Alternativ kann das Dichtelement 52 auch direkt an dem sich radial erstreckenden Endabschnitt 50 oder dem Ölführungselement 54 anliegen und dann mit dem Planetenträger 38 abdichten. Auch eine integrale Ausführung mit einem dieser Teile ist möglich.

In Fig. 5 sind Details einer zweiten Ausführungsform ohne Ölrückführung veranschaulicht. Es werden lediglich Unterschiede zu der ersten Ausführungsform beschrieben. Bei der zweiten Ausführungsform ist das Dichtelement 52 axial zwischen dem Sicherungsring 60 und dem Ölführungselement 54 angeordnet. Das Dichtelement 52 ist dabei integral an dem Ölführungselement 54 angeformt. Alternativ kann das Dichtelement 52 auch integral an dem Sicherungsring 60 angeformt sein. In noch einer Ausführungsform ist das Dichtelement 52 auch hier als separates Bauteil ausgebildet.

Das Dichtelement 52 ist in einer Ausführungsform als dauerhafte Dichtung ausgebildet, welche auch bei dem Betrieb der Windkraftanlage 10 dauerhaft seine Dichtfunktion beibehält. In anderen Ausführungsformen ist das Dichtelement 54 als temporäre Dichtung ausgebildet. Eine solche Gestaltung ist beispielsweise in Fig. 5 gezeigt. Durch eine Relativbewegung zwischen dem Sicherungsring 60 und dem Ölführungselement 54 wird das Dichtelement 52 schnell über einen kurzen Betriebszeitraum abgerieben. Das Material des Dichtelements 52 ist dabei so gewählt, dass es zu keiner Überhitzung kommt.

### Bezugszeichen

- 10: Windkraftanlage
- 12: Rotor
- 14: Nabe
- 16: Rotorwelle
- 18: Wälzlager
- 20: Gondel
- 22: Getriebe
- 24: Generator
- 26: Bremse
- 28: Turm
- 30: Netzanschluss
- 32: erster Planetenradsatz
- 34: zweiter Planetenradsatz
- 36: Getriebegehäuse
- 38: Planetenträger
- 40: Zwischengehäuseelement
- 42: Planetenbolzen
- 44: Linien
- 50: radial erstreckender Endabschnitt
- 52: Dichtelement
- 54: Ölführungselement
- 56: Ölkanal
- 58: Leitungselement
- 60: Sicherungsring / Rückführungselement
- 62: weiterer Ölkanal
- 64: Durchgangsöffnung

## Patentansprüche

1. Getriebeanordnung für eine Windkraftanlage (10) mit einem Getriebe (22), wobei das Getriebe (22) wenigstens ein Getriebegehäuse (36) und einen in einem Innenraum des Getriebegehäuses (36) angeordneten Planetenradsatz (32) aufweist, wobei ein Planetenträger (38) des Planetenradsatzes (32) einen Antrieb des Getriebes (22) ausbildet, wobei der Planetenträger (38) in der montierten Windkraftanlage (10) an einer Rotorwelle (16) der Windkraftanlage (10) gelagert ist, wobei das Getriebegehäuse (36) an einer in der montierten Windkraftanlage (10) einem Rotor (12) der Windkraftanlage (10) zugewandten Ende einen sich radial erstreckenden Endabschnitt (50) aufweist, und wobei die Getriebeanordnung ein Dichtelement (52) aufweist, welches den sich radial erstreckenden Endabschnitt (50) mit dem Planetenträger (38) abdichtet, um den Innenraum rotorseitig abzudichten.

2. Getriebeanordnung nach Anspruch 1, **dadurch gekennzeichnet, dass** der sich radial erstreckende Endabschnitt (50) dazu ausgebildet ist, dem Planetenradsatz (32) Öl für dessen Schmierung zuzuführen.

3. Getriebeanordnung nach Anspruch 2, **dadurch gekennzeichnet, dass** die Getriebeanordnung ein Ölführungselement (54) aufweist, welches dazu ausgebildet ist, Öl von dem sich radial erstreckende Endabschnitt (50) zu dem Planetenträger (38) für dessen Schmierung zu leiten.

4. Getriebeanordnung nach Anspruch 2 oder 3, **dadurch gekennzeichnet, dass** der Planetenträger (38) wenigstens einen sich axial von einem in der montierten Windkraftanlage (10) dem Rotor (12) zugewandten Ende zu einem Planetenbolzen (42) des Planetenträgers (38) erstreckenden Ölkanal (56) aufweist.

5. Getriebeanordnung nach einem der Ansprüche 2 bis 4, **dadurch gekennzeichnet, dass** die Getriebeanordnung eine in der montierten Windkraftanlage (10) dem Rotor (12) zugewandte Ölrückführung aufweist, welche dazu ausgebildet ist, Öl zurück in den Innenraum des Getriebegehäuses (36) zu führen.

6. Getriebeanordnung nach Anspruch 5, **dadurch gekennzeichnet, dass** die Getriebeanordnung ein Rückführungselement (60) aufweist, welches rotorseitig neben dem Getriebegehäuse (36) außerhalb des Innenraums angeordnet ist und einen sich wenigstens teilweise radial nach außen erstreckenden Ölkanal (62) aufweist.

7. Getriebeanordnung nach Anspruch 5, **dadurch gekennzeichnet, dass** das Dichtelement (52) zwischen dem Rückführungselement (60) und dem Planetenträger (38) abdichtet.

8. Getriebeanordnung nach einem der Ansprüche 5 bis 7, **dadurch gekennzeichnet, dass** der sich radial erstreckende Endabschnitt (50) eine Durchgangsöffnung (64) aufweist, welche für die Ölrückführung in den Innenraum des Getriebegehäuses (36) ausgebildet ist.

9. Getriebeanordnung nach einem der vorhergehenden Ansprüche, **dadurch gekennzeichnet, dass** das Dichtelement (52) als temporäre Dichtung ausgebildet ist.

10. Windkraftanlage (10) mit einem Rotor (12), welcher mit einer Rotorwelle (16) permanent drehfest verbunden ist und einer Getriebeanordnung nach einem der vorhergehenden Ansprüche, wobei der Planetenträger (38) an der Rotorwelle (16) der Windkraftanlage (10) gelagert ist.
